# EUROPEAN PATENT APPLICATION

(11) **EP 0 707 994 A1**
(43) Date of publication of application: **24.04.1996**
(21) Application number: 95307304.6
(22) Date of filing: 16.10.1995
(51) Int. Cl.: B60J 1/20

(54) **A rolling shade device for rear window of car**

(30) Priority: 17.10.1994 US 324340
(71) Applicant: FORMOSA SAINT JOSE CORPORATION, Taipei (TW)
(72) Inventor: Yang, Ming-Shun, Taipei (TW)
(74) Representative: Arthur, Bryan Edward

(57) **Abstract**

The present invention consists of a rolling shade base (10), a set of rolling shade capable of automatic contraction through a spring (12), two movable clips (30), a fixed clip (40), two support rods (50), a tractive line (70) and a motor base (80) with a set of an interior motor gear; the fixed clip (40) and two movable clips (30) are installed on the rolling shade base (10), and the fixed clip is further fixed on the motor base so as to fix the motor base and the rolling shade base as one body; one end of the support rod (50) is inserted into the recess provided to the movable clip (30), and another end thereof is inserted into the hole on the holder (60) so that the support rod (50) can bear the holder (60) against the ceiling of car; and when the present invention is well installed, the tractive line (70) can be retractable through the motor gear set so as to actuate spreading or folding the rolling shade.

## Description

### BACKGROUND OF THE INVENTION:

The people in the car exposed under the hot sunshine certainly feel very scorching and uncomfortable. Therefore, there are various car window curtains or shades on sale in order to prevent the sunshine from radisting into the car. So far as the special rear window shade device of car is concerned, there are heatproof paper, blind, rolling screen, etc. for the user's choice but the use of such device is not ideal. For instance, the heatproof paper will leave an ugly trace after it is torn off, and in case of installing the blind or rolling screen, somewhere of interior panel and decoration of the car has to be drilled or nailed, it is timeconsuming and inconvenient and will damage the said interior decoration. Such a large drawback has to be improved. The present invention is designed to eliminate the said drawback of conventional shade device for the rear window of car and can achieve the purpose of shading the car from sunshine since its combination and installation as well as operation are simple and convenient and it will never damage the interior decoration of the car.

### SUMMARY OF THE INVENTION:

The present invention consists of a rolling shade base, a set of rolling shade capable of automatic contraction through a spring, two movable clips, a fixed clip, two support rods, a tractive line and a motor base with a set of an interior motor gear; the fixed clip and two movable clips are installed on the rolling shade base, and the fixed clip is further fixed on the motor base so as to fix the motor base and the rolling shade base as one body; one end of the support rod is inserted into the recess provided to the movable clip, and another end thereof is inserted into the hole on the holder so that the support rod can bear the holder against the ceiling of car; and when the present invention is well installed, the tractive line can be retractable through the motor gear set so as to actuate spreading or folding the rolling shade.

### BRIEF DESCRIPTION OF THE INVENTION:

Fig. 1 is an elevational appearance view of the rolling shade device according to the present invention.

Fig. 2 is a partial section view of the holder of the present invention.

Fig. 3 is an example of manually operating the rolling shade of the present invention.

Fig. 4 is a schema of relation between the grip and holder provided to the rolling shade of the present invention.

Fig. 5 is a breakdown view of the rolling shade device of the present invention.

Fig. 6 is a schema of the movable clips capable of sliding on the rolling shade base of the present invention.

Fig. 7 is a section view of movable clips having not been fixed together with the rolling shade base of the present invention.

Fig. 8 is a section view of movable clips having been fixed together with the rolling shade base of the present invention.

Fig. 9 is a side section view of motor base of the present invention.

### DETAILED DESCRIPTION:

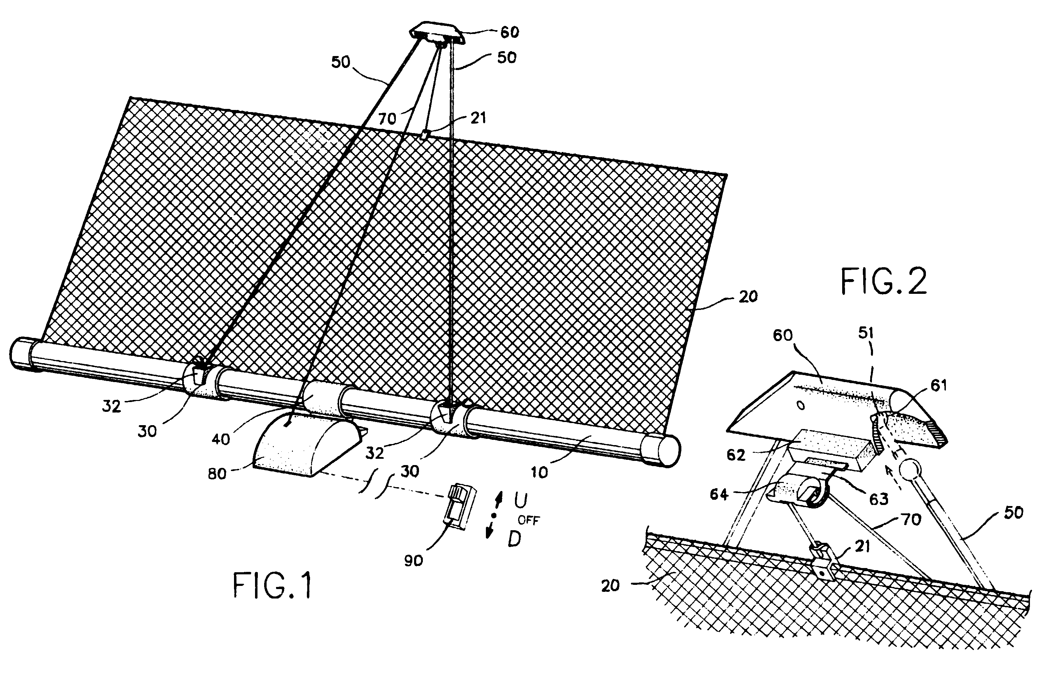

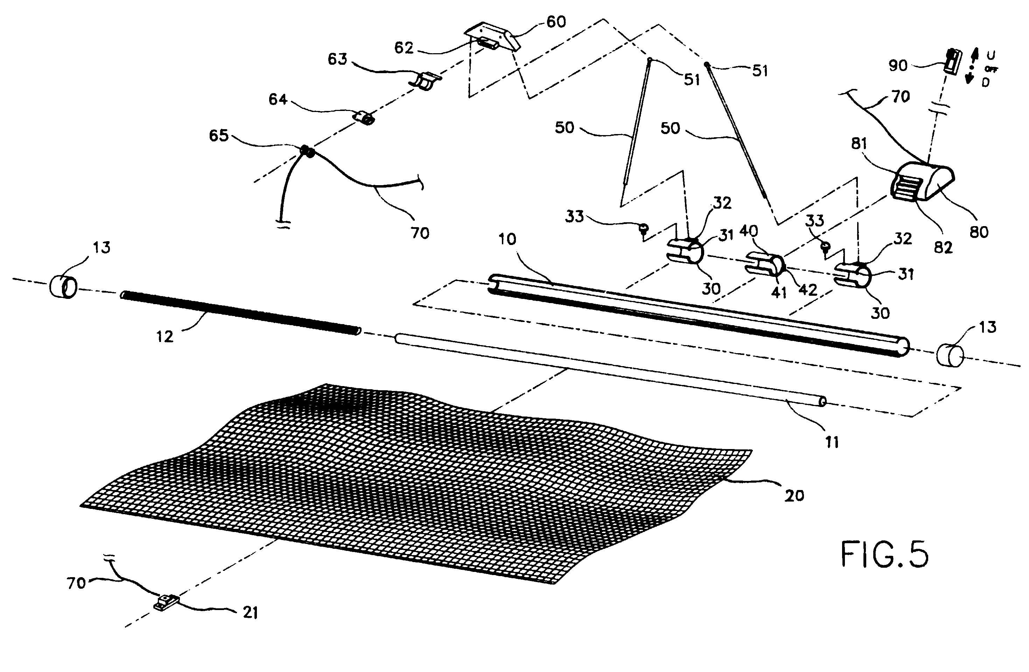

As shown in Fig. 1 and 5, the rolling shade device for rear window of car of the present invention essentially consists of a rolling shade base (10), a rolling shade (20), two movable clips (30), a fixed clip (40), two support rods (50), a holder (60), a tractive line (70) and a motor base (80). The rolling shade base (10) is a C-shaped hollow tube wherein a shaft tube (11) and a spring (12) are disposed. When the rolling shade (20) is fixed on the shaft tube (11), the two ends of rolling shade base (10) can be sealed with two covers (13), and the rolling shade (20) can be kept in the rolling shade base (10) through the compressive force of the spring (12).

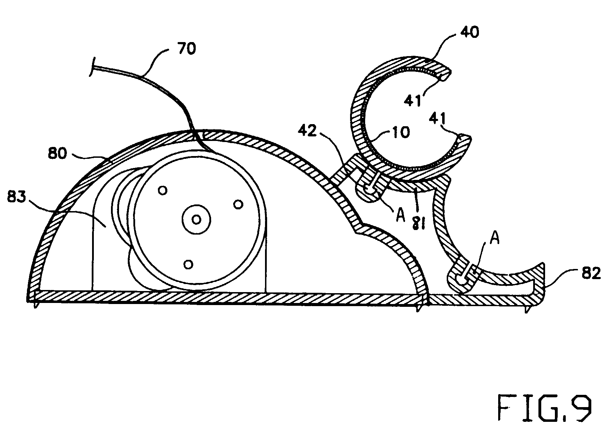

As shown in Fig. 5 and 9, the two end edges on the front side of the fixed clip (40) are provided with two hooks (41), and the rear side thereof is provided with a convex catch (42). When to dispose the rolling shade base (10) into the fixed clip (40), the two hooks (41) can catch and fix the rolling shade base (10) without coming off therefrom, and the convex catch (42) can be inserted into the groove (A) on the upper base (81) or lower base (82) provided on the motor base (80) so that the fixed clip (40) can be fixed on the motor base (80). The upper base (81) and lower base (82) on the motor base (80) are designed to let the fixed clip (40) choose a higher or lower position so as to make way for the protruding articles in the car such as the car audiophile and loudspeaker.

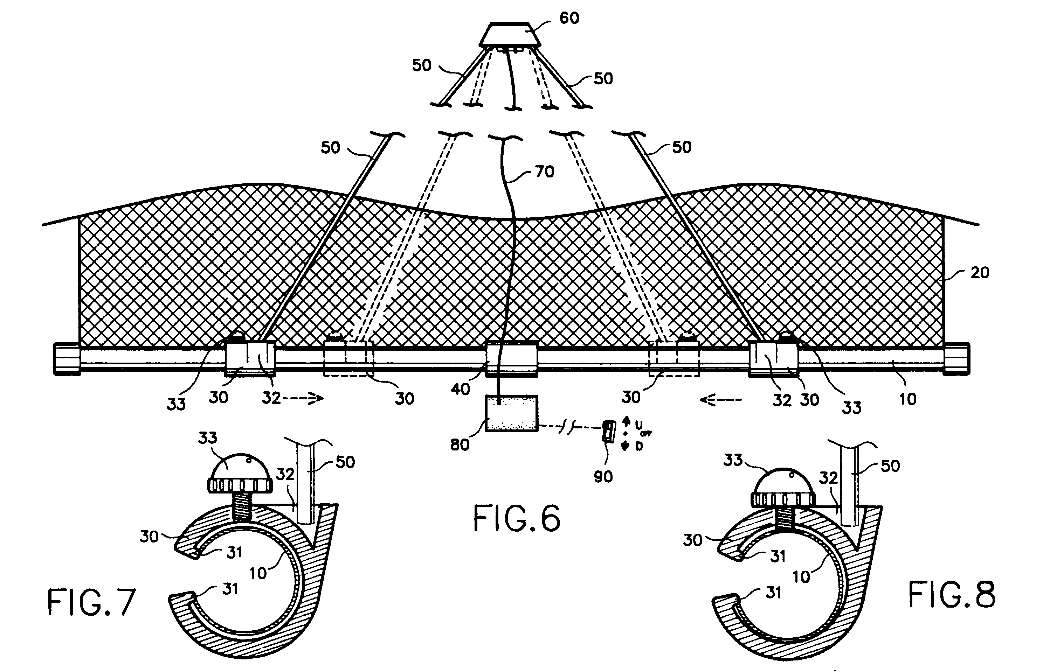

As shown in Fig. 1, 5, 6 and 7, the two end edges on the front side of movable clip (30) are also provided with two hooks (31), and the rear side thereof is provided with a recess (32); when the rolling shade base (10) is disposed in the movable clip (30), the hooks (31) can catch the rolling shade base (10) and tightly bear against and fix the rolling shade base (10) through a bolt (33) as shown in Fig. 8. When to adjust the height of the two support rods (50), first to turn the bolt (33) loose so as to not let the bolt (33) bear against the rolling shade base (10) as shown in Fig. 7, then as shown on the dotted lines in Fig. 6, the position of movable clip (30) can be optionally slided so as to adjust the height of two support rods (50). The recess (32) is designed to receive the bottom ends of two support rods (50), and the top ends thereof are inserted into the hole (61) on the holder (60). As shown in Fig. 2, a sphere (51) is formed at the top end of each support rod (51) and able to be inserted into the hole (61) on the holder (60) so that the support rods (50) can bear the holder (60) against the ceiling of car.

As shown in Fig. 2, 5 and 9, the holder (60) is provided with a clip (62) which can catch and fix a hook (63) whereon a pulley (65) and a pulley seat (64) can be disposed. When the tractive line (70) is pulled out from the motor gear set (83) in the motor base (80) and pulled and fixed onto the line clip (21) on the rolling shade (20) through the pulley (65), and at the same time, a switch (90) can be pressed upward (U) or downward (D) so as to actuate spreading or folding the rolling shade (20).

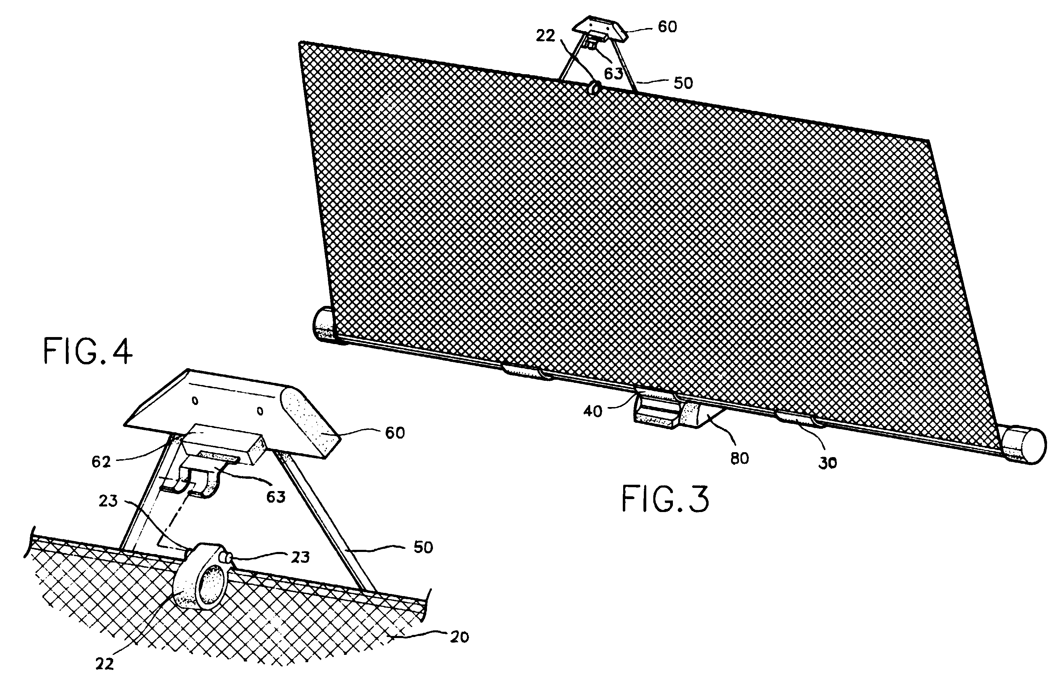

As shown in Fig. 3 and 4, when to operate the rolling shade device of the present invention manually, it is unnecessary to dispose the pulley (65) and pulley seat (64) on the hook (63) but to remove the line clip (21) from the rolling shade (20) and install a grip (22) thereon so that the rolling shade (20) can be manually operated upward or downward. The grip (22) has two ears (23) which can be hanged on the hook (63) so that the rolling shade (20) can be fixed on the holder (60) without coming off therefrom.

The structure of the rolling shade device for rear window of car according to the present invention is simple but the combination, installation and operation thereof are very convenient, and obviously its novelty and practicability are patentable.

## Claims

1. A rolling shade device for rear window of car which consists the following members:
a rolling shade base which is a C-shaped hollow tube wherein a rolling shade is disposed and capable of automatic contraction through a spring;
a fixed clip, of which the two end edges and the front side are provided with two hooks for the fixed clip to catch and fix the rolling shade base, and the rear side thereof is provided with a convex catch;
two movable clips, of which the two end edges on the front side are also provided with two hooks, and the rear side thereof is provided with a recess;
two support rods, of which the top end is a sphere capable of movably inserted into the hole on the holder, and the bottom end thereof is inserted into the recess on the movable clip;
a holder which is provided with a clip capable of catching and fixing a hook for disposing a pulley seat and a pulley thereon;
a motor base wherein a motor gear set is provided, and an upper base and a lower base are provided on the exterior of the motor base; and
a tractive line; and
through the foregoing structure, when to press a switch to let the motor gear set pull the tractive line back or spread the tractive line out so as to actuate spreading or folding the rolling shade.

2. A rolling shade for rear window of car as claimed in Claim 1, wherein the rolling shade can be provided with a line clip or a grip; when to electrically operate the rolling shade, the tractive line can be fixed on the line clip; and when to manually operate same, the two ears on the grip can be hanged on the hook on the holder so as to fix the rolling shade on the holder without coming off therefrom.
